# FASCICULE DE BREVET EUROPEEN

(11) **EP 3 361 344 B1**
(45) Date de publication et mention de la délivrance du brevet: **04.11.2020**
(21) Numéro de dépôt: 18151571.9
(22) Date de dépôt: 15.01.2018
(51) Int. Cl.: G05D 1/00, B64C 13/50, B64C 39/02

(54) **SYSTÈME ET PROCÉDÉ DE PILOTAGE AUTOMATIQUE D'UN AÉRONEF, ET AÉRONEF**
SYSTEM UND VERFAHREN ZUR AUTOMATISCHEN STEUERUNG EINES LUFTFAHRZEUGS, UND LUFTFAHRZEUG
AN AIRCRAFT AUTOPILOT SYSTEM AND METHOD, AND AN AIRCRAFT

(30) Priorité: 08.02.2017 FR 1700133
(43) Date de publication de la demande: 15.08.2018
(73) Titulaire: Airbus Helicopters, 13725 Marignane Cedex (FR)
(72) Inventeur: VIEUX, Thierry, 13620 CARRY LE ROUET (FR)
(74) Mandataire: GPI & Associés

(56) Documents cités:
- EP-A1- 3 043 264
- WO-A1-2016/193884
- US-A- 4 644 538
- US-A- 5 550 736
- US-A1- 2007 164 166

## Description

La présente invention concerne un système et un procédé de pilotage automatique d'un aéronef, et un aéronef muni de ce système. Par exemple, un tel aéronef peut être un giravion, et/ou un aéronef sans pilote connu sous l'acronyme UAV correspondant à l'expression anglaise « Unmanned Aerial Vehicule ».

Classiquement, un aéronef comporte des organes de pilotage. Les organes de pilotage permettent de contrôler le déplacement de l'aéronef dans l'espace. Ces organes de pilotage peuvent comprendre au moins un moteur, des pales d'un rotor et éventuellement d'un rotor participant au moins partiellement à la propulsion et/ou la sustentation de l'aéronef, des volets et par exemple un volet disposé sur un empennage ou sur une dérive dénommés respectivement « gouverne de profondeur » et « gouverne de direction »...

L'expression « organe de pilotage » désigne ainsi par la suite, un organe permettant de modifier la position de l'aéronef dans l'espace, et éventuellement des organes aérodynamiques.

Un aéronef et notamment un aéronef sans pilote peut comprendre un système de pilotage automatique permettant de guider l'aéronef le long d'une trajectoire programmée.

Un tel système de pilotage automatique peut comprendre des organes de commande qui pilotent les organes de pilotage. Dès lors, le système de pilotage automatique comporte un calculateur qui commande les organes de commande en fonction de données de vol mesurées par des divers senseurs. Le calculateur peut par exemple piloter la puissance développée par un moteur, éventuellement en pilotant un système d'injection de carburant de ce moteur. Le calculateur peut aussi piloter des actionneurs qui commandent la position de surfaces aérodynamiques dans le référentiel de l'aéronef. Par exemple, les actionneurs peuvent régler le pas de pales d'au moins un rotor qui participe au moins partiellement à la sustentation et/ou à la propulsion de l'aéronef. Des actionneurs peuvent aussi régler l'incidence d'au moins un volet disposé par exemple sur une aile, sur un empennage, sur une dérive...

Le calculateur peut piloter les organes de commande en fonction de contraintes diverses, telles que des consignes de mouvement en roulis/tangage/lacet poussée, pour suivre une trajectoire mémorisée.

Sur un aéronef de fort tonnage embarquant un équipage, les systèmes de pilotage automatique peuvent être suffisamment robustes pour respecter les normes de conception et de réalisation en vigueur afin d'autoriser le vol, notamment au dessus d'une population. Les équipements d'un tel système de pilotage automatique présentent alors des niveaux de fiabilité/sécurité élevés, les niveaux de fiabilité/sécurité étant parfois connus sous l'acronyme *DAL* et l'expression anglaise « Development Assurance Level ». Ces systèmes de pilotage automatique peuvent alors présenter une masse importante, mais raisonnable au regard de la masse totale de l'aéronef.

Dans le cas d'aéronef sans pilote allégé, les systèmes de pilotage automatique sont de fait plus légers. Les systèmes de pilotage automatique comprennent alors des équipements ayant des niveaux de fiabilité/sécurité plus faibles. Ces systèmes de pilotage automatique peuvent rencontrer des difficultés pour respecter les normes de conception et de réalisation. Les éléments constitutifs de certains systèmes de pilotage automatique permettent de guider un aéronef sans pilote sur une trajectoire programmée, mais ne sont pas nécessairement compatibles en termes de fiabilité et de sécurité avec des normes à respecter pour voler dans des conditions réglementaires prévues par l'aviation civile. Un vol commercial d'un tel aéronef au dessus d'une population est alors susceptible de ne pas être autorisé.

Le document FR 2 958 418 décrit un système de gestion de vol d'un aéronef sans pilote. Ce document illustre un système muni d'une station sol et d'un aéronef sans pilote.

Ce système prévoit une fonction de construction de plan de vol, une fonction de construction de trajectoire et une fonction de guidage permettant de générer des consignes de guidage. En fonction des variantes, certaines fonctions sont réalisées par la station sol ou par un système de pilotage automatique de l'aéronef. De plus, le système de pilotage automatique remplit une fonction de commande en élaborant des commandes destinées à commander l'aéronef à partir des consignes de guidage.

Les documents US4644538, US 2007/164166, US 5550736 et WO 2016/193884 sont aussi connus. Le document US 2007/164166 est notamment éloigné de l'invention en ayant trait à système de commande électrique dit « fly by wire » et non pas à un système de pilotage automatique.

La présente invention a alors pour objet de proposer un système de pilotage automatique innovant tendant à présenter des niveaux de fiabilité et de sécurité élevés, pour par exemple respecter des normes établies par l'aviation civile.

La présente invention concerne alors un système de pilotage automatique destiné à un aéronef, par exemple un aéronef sans pilote humain, selon la revendication 1.

L'expression « plusieurs jeux de senseurs redondants et indépendants » signifie que le système de pilotage automatique comporte au moins deux, voire au moins trois jeux de senseurs. Ces jeux de senseurs sont redondants dans le sens où les jeux de senseurs déterminent au moins les mêmes données. Ces jeux de senseurs sont de plus indépendants dans le sens où un jeu de senseurs n'a pas besoin d'un autre jeu de senseurs pour fonctionner.

L'expression « plusieurs voies de calcul redondantes et indépendantes » signifie que le système de pilotage automatique comporte au moins deux voies de calcul. Ces voies de calcul sont redondantes dans le sens où les voies de calcul déterminent au moins les mêmes types de commande. Ces voies de calcul sont de plus indépendantes dans le sens où une voie de calcul n'a pas besoin d'une autre voie de calcul pour fonctionner, voire ne communique pas avec les autres voies de calcul.

Par exemple, chaque voie de calcul peut comporter un calculateur.

De manière alternative, les voies de calcul peuvent représenter des voies distinctes d'un même calculateur. Eventuellement, les voies de calcul sont respectivement représentées par des cartes électroniques différentes d'un calculateur, chaque carte électronique représentant une unique voie de calcul.

Par ailleurs, les organes de commande peuvent comprendre au moins un des organes suivants : un actionneur par exemple apte à agir sur une chaîne de transmission de puissance reliée à au moins un organe de pilotage, un système d'injection de carburant...

Par ailleurs, le système de pilotage automatique est muni d'un superviseur. Ce superviseur peut être un calculateur indépendant, ou encore un sous-ensemble d'un calculateur comprenant lesdites voies de calcul.

A chaque instant, ce superviseur met en communication au maximum une unique voie de calcul avec les organes de commande. Seule la voie de calcul dite « voie engagée » couplée aux organes de commande pilote ces organes de commande.

En cas de dysfonctionnement d'une voie de calcul, le superviseur connecte une autre voie de calcul aux organes de commande. Si toutes les voies de calcul sont dans un état de dysfonctionnement, le superviseur peut éventuellement commander à son tour les organes de commande. Dès lors, une panne de la première voie engagée ou du jeu de senseurs associé n'est pas catastrophique pour l'aéronef, puisqu'au moins une autre voie de calcul peut être engagée en remplacement.

Une panne de la voie engagée ou du jeu de senseurs associé peut être détectée par le superviseur et/ou une station déportée en comparant le comportement courant de l'aéronef à un comportement prédictif mémorisé, par exemple avant le vol. Selon cette variante, la trajectoire de l'aéronef est déterministe, cet aéronef effectuant un déplacement programmé, piloté par la voie engagée. Une sortie de trajectoire détectée permet de mettre en cause l'intégrité de cette voie engagée, et de la mettre hors service au profit d'une autre voie de calcul.

L'aéronef est ainsi piloté/guidé par plusieurs voies de calcul dont une seule est couplée aux organes de commande, et par exemple aux moteurs de l'aéronef, sous la surveillance du superviseur. Une seule voie de calcul à la fois peut alors générer un signal servant à commander les organes de commande.

Ce système de pilotage automatique ségrége alors la fonction « pilotage » réalisée par les voies de calcul dans des conditions normales, et la fonction « supervision » réalisée par le superviseur. En cas de panne du superviseur la voie engagée continue à guider l'aéronef.

Ce système de pilotage automatique présente ainsi une combinaison d'éléments multiples pouvant avoir un niveau d'exigence réglementaire différent. Certains organes du système de pilotage automatique peuvent avoir un niveau fiabilité/sécurité relativement faible et d'autres un niveau de fiabilité/sécurité relativement élevé. Cette combinaison et le procédé appliqué permettent d'atteindre une architecture globale tendant à obtenir un niveau d'exigence élevé, malgré la présence d'organes ayant un niveau de sécurité moyen.

En effet, le superviseur est réalisé de manière à présenter un niveau de sécurité/fiabilité élevé afin d'assurer une ou plusieurs des fonctions suivantes : la surveillance des senseurs, la création d'une référence senseur consolidée, la sélection de la voie de calcul adéquate, l'exclusion de la voie engagée en cas de défaillance déclarée, la surveillance de l'enveloppe de vol suivie, la surveillance du comportement prédictif de l'aéronef, la mise en œuvre d'un mode de secours en cas de défaillances de toutes les voies de calcul.

A l'inverse, les voies de calcul et les jeux de senseurs peuvent être d'un type connu, et peuvent individuellement présenter un niveau de fiabilité et de sécurité plus faible dans la mesure où ces organes sont redondés et surveillés par le superviseur. Des voies de calcul et des jeux de senseurs relativement peu encombrants sont ainsi envisageables.

Le niveau d'exigence global en terme sécuritaire est finalement atteint par l'utilisation d'organes différents, par l'utilisation d'une architecture redondante et la mise en place d'une surveillance du système par un superviseur. Un système de pilotage automatique léger mais présentant un niveau fiabilité/sécurité relativement élevé est alors envisageable, notamment pour un aéronef sans pilote de faibles dimensions.

Ce système de pilotage automatique peut présenter un avantage économique par l'utilisation de composants dont le niveau d'exigences est faible en comparaison d'un équipement ayant un niveau de fiabilité/sécurité élevé.

De plus, ce système de pilotage automatique peut éventuellement utiliser des composants du commerce, ce qui facilite sa réalisation.

Ce système de pilotage automatique peut comporter une ou plusieurs des caractéristiques qui suivent.

Par exemple, chaque jeu de senseurs peut être relié à une unique voie de calcul ou uniquement au superviseur.

Un mode de réalisation minimaliste peut comporter deux voies de calcul avec leurs jeux de senseurs respectifs, et un superviseur avec son propre jeu de senseurs.

Le superviseur peut établir un référentiel consolidé de positionnement et de mouvement de l'aéronef sur la base d'une analyse de cohérence des différents senseurs.

A titre d'exemple, en présence de trois systèmes de positionnement par satellite, le superviseur peut estimer la position de l'aéronef par un procédé de vote usuel. Il en va de même pour les mouvements de l'aéronef.

Selon un autre aspect, chaque jeu de senseurs peut comporter un système de positionnement positionnant ledit aéronef dans le référentiel terrestre et une centrale inertielle.

Selon un autre aspect, le système de pilotage automatique peut comporter un ensemble déporté qui n'est pas destiné à être embarqué dans l'aéronef, cet ensemble déporté ayant un calculateur en communication avec le superviseur par une liaison non filaire.

L'ensemble déporté peut permettre de surveiller la position et les mouvements de l'aéronef pour détecter une anomalie, et/ou peut piloter les organes de commande via le superviseur.

Selon un autre aspect, l'ensemble déporté peut comporter un dispositif de positionnement pour déterminer la position et le mouvement de l'ensemble embarqué.

Par exemple, l'ensemble déporté peut comprendre un radar scrutant l'évolution de l'aéronef.

Selon une variante, la surveillance du comportement courant de l'aéronef est réalisée au niveau d'un ensemble déporté, par exemple une station sol, présentant un haut niveau de fiabilité/sécurité. Si l'ensemble déporté détecte une sortie de trajectoire ou une trajectoire erratique, cet ensemble déporté peut indiquer au superviseur par l'intermédiaire d'une liaison non filaire, par exemple par radio fréquence, d'exclure la voie engagée puis de basculer sur une voie de calcul saine. Si besoin, l'ensemble déporté peut prendre en charge le pilotage de l'aéronef.

L'invention vise aussi un aéronef muni d'au moins un organe de pilotage qui pilote un mouvement de l'aéronef. Cet aéronef comporte alors un système de pilotage automatique selon l'invention, l'ensemble embarqué étant embarqué dans l'aéronef.

Cet aéronef peut comporter une ou plusieurs des caractéristiques qui suivent.

Ainsi, l'aéronef peut être un aéronef sans pilote embarqué, aucun pilote n'étant embarqué dans cet aéronef voire aucun pilote ne pilotant cet aéronef.

Selon un autre aspect, les organes de pilotage peuvent comprendre au moins un des organes suivants : un moteur, une surface aérodynamique mobile par rapport à un référentiel de l'aéronef.

L'invention vise aussi un procédé de pilotage automatique selon la revendication 10.

L'expression « vol courant » peut désigner une phase allant de l'allumage des moteurs jusqu'à l'arrêt des moteurs de l'aéronef.

Selon ce procédé, le superviseur désengage la voie engagée en présence d'un comportement imprévu de l'aéronef, et le cas échéant engage une autre voie de calcul.

Le procédé peut comporter une ou plusieurs des caractéristiques qui suivent.

Par exemple, chaque jeu de senseurs pouvant déterminer des données incluant une position de l'aéronef et des paramètres de mouvement illustrant/définissant un mouvement de l'aéronef, ledit superviseur détermine une position consolidée et des paramètres de mouvement consolidés en analysant la cohérence desdites positions et des paramètres de mouvement fournis par les senseurs des jeux de senseurs.

Par exemple, chaque jeu de senseurs comporte un système de positionnement par satellite fournissant la position de l'aéronef. La position de l'aéronef peut alors être exprimée par une latitude ainsi qu'une longitude et une hauteur par exemple.

De plus, une centrale inertielle peut fournir des paramètres de mouvement de l'aéronef, tels que des angles de roulis/tangage et lacet de l'aéronef, des vitesses/accélérations angulaires ainsi que des vitesses/accélérations horizontales et verticales.

Par des analyses usuelles, le superviseur reçoit les diverses données mesurées, et en déduit une position consolidée et des paramètres de mouvement consolidés. Un référentiel consolidé des senseurs avec un vote à au moins trois jeux de senseurs peut permettre d'écarter un jeu de senseurs en panne.

Selon un autre aspect, le comportement courant peut être surveillé par le superviseur en utilisant la position consolidée et les paramètres de mouvement consolidés.

Chaque voie de calcul est par exemple programmée pour que l'aéronef évolue dans une enveloppe de vol avec des limites en assiette et vitesses/accélérations angulaires ainsi qu'en vitesses/accélérations horizontale et verticale. En cas de dépassement d'un de ces limites, la voie engagée est désélectionnée par le superviseur. Un choix optimal des limites permet d'anticiper le fait que l'aéronef se trouve dans une situation difficile à maintenir en vol par la nouvelle voie engagée.

Selon un autre aspect, le comportement courant peut être surveillé par un ensemble déporté situé en dehors de l'aéronef, la station déportée indiquant au superviseur si la voie engagée doit être découplée des organes de commande.

Selon un autre aspect, le superviseur peut comporter une liste hiérarchisant les voies de calcul, ledit superviseur choisissant la voie de calcul qui doit être la voie engagée en utilisant ladite liste.

Par exemple, le superviseur couple en premier lieu la première voie de calcul de cette liste avec les organes de commande. Si le superviseur désengage cette première voie de calcul, le superviseur couple en second lieu la deuxième voie de calcul de cette liste, et ainsi de suite.

Selon un autre aspect, lorsque le superviseur a découplé toutes les voies de calcul lors du vol courant, le superviseur peut appliquer un mode de secours en commandant lui-même lesdits organes de commande pour mettre en vol stationnaire l'aéronef dans l'attente d'un pilotage par un ensemble déporté non présent dans l'aéronef, ledit ensemble déporté communiquant avec ledit superviseur pour piloter l'aéronef.

Un mode de secours peut être activé en cas de pannes de toutes les voies de calcul, ou d'une sortie du domaine de vol non rattrapable par une méthode de stabilisation normale.

Ce mode de secours peut permettre de rattraper le véhicule en cas d'attitude anormale, par une remise à plat en vol stationnaire dans l'attente d'une reprise en main par l'ensemble déporté.

Eventuellement, lorsque le superviseur a découplé toutes les voies de calcul, durant un même vol, le superviseur peut contrôler lesdits organes de pilotage pour suivre une procédure préprogrammée.

Un mode de secours peut être activé en cas de pannes de toutes les voies de calcul pour que le superviseur applique une procédure automatique programmée dans ce superviseur. Selon une telle procédure automatique, le superviseur peut piloter l'aéronef pour le faire descendre à vitesse contrôlée vers une zone d'atterrissage de secours.

L'invention et ses avantages apparaîtront avec plus de détails dans le cadre de la description qui suit avec des exemples donnés à titre illustratif en référence aux figures annexées qui représentent :
- la figure 1, un schéma illustrant un aéronef ayant un système de pilotage automatique, et
- la figure 2, un schéma illustrant un aéronef ayant un système de pilotage automatique muni d'un ensemble embarqué et d'un ensemble déporté.

Les éléments présents dans plusieurs figures distinctes sont affectés d'une seule et même référence.

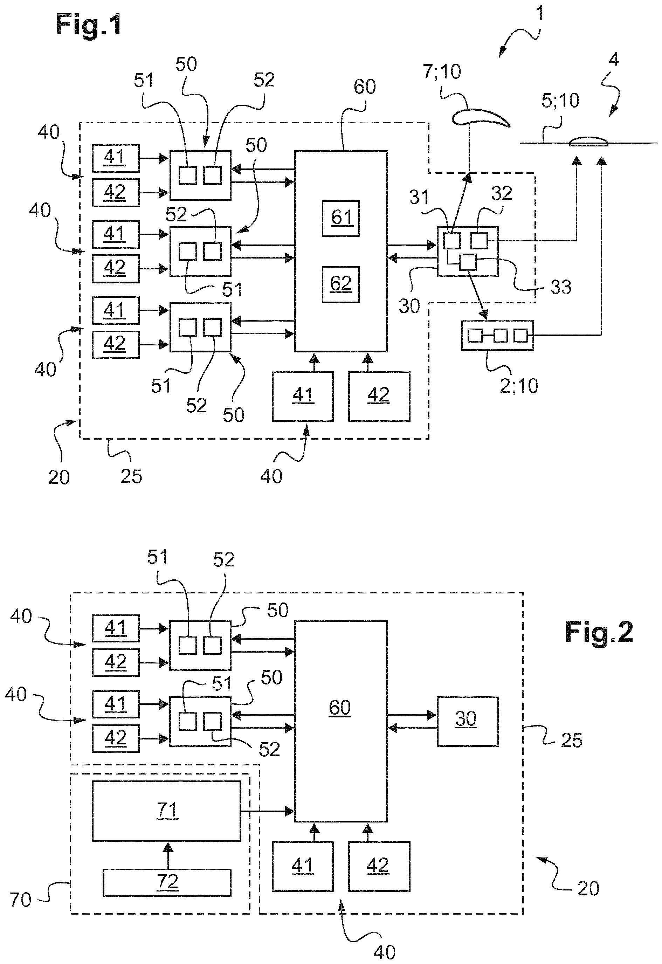

La figure 1 présente un aéronef 1 muni d'un système de pilotage automatique 20. Cet aéronef 1 peut être un aéronef piloté par un humain, ou encore un aéronef sans pilote humain UAV.

Cet aéronef 1 peut être muni de surfaces de sustentation, de type pales 5 de rotor, aile, empennage, dérive, volet 7.... De plus, l'aéronef peut être muni d'organes moteurs 2, de type moteur à combustion, moteur électrique.... Par exemple, l'aéronef 1 comporte au moins un rotor 4 muni de pales 5, le rotor étant mis en rotation par une installation comprenant au moins un moteur.

Dès lors, l'aéronef 1 est muni d'au moins un voire au moins deux organes de pilotage 10 permettant de piloter les évolutions de cet aéronef 1 dans l'espace. De tels organes de pilotage 10 peuvent inclure au moins un moteur 2. De manière complémentaire ou alternative, les organes de pilotage 10 peuvent inclure au moins une surface aérodynamique 5, 7 qui est mobile par rapport à un référentiel de l'aéronef, tel que par exemple une pale 5 de rotor à pas variable ou un volet 7 mobile.

Dès lors, le système de pilotage automatique 20 permet d'agir sur les organes de pilotage sans intervention d'un pilote embarqué dans l'aéronef.

Ainsi, ce système de pilotage automatique 20 est muni d'un ensemble embarqué 25 présent dans l'aéronef 1. Cet ensemble embarqué 25 comprend au moins un organe de commande pilotant au moins un organe de pilotage 10. De manière usuelle, un organe de commande 30 peut prendre la forme d'au moins un actionneur pouvant déplacer une surface aérodynamique, et par exemple un actionneur 31 de type vérin agissant sur l'angle d'incidence d'un volet. De manière complémentaire ou alternative, un organe de commande 30 peut comprendre au moins un actionneur agissant sur le pas d'une pale, et par exemple une servocommande 32 déplaçant une pale éventuellement via un ensemble de plateaux cycliques et une bielle. De manière complémentaire ou alternative, un organe de commande 30 peut comprendre au moins un système d'injection de carburant 33 fournissant du carburant à un moteur 2, ou tout autre système permettant de contrôler un moteur 2.

De manière générale, l'aéronef peut comprendre des organes de pilotage et des organes de commandes usuels sans sortir du cadre de l'invention.

En outre, le système de pilotage automatique 20 comporte plusieurs voies de calcul 50 indépendantes les unes des autres, et notamment au moins deux voies de calcul 50. La figure 1 illustre un système de pilotage automatique ayant trois voies de calcul 50, la figure 2 illustrant un système de pilotage automatique ayant deux voies de calcul 50.

L'expression « voie de calcul » désigne une unité de calcul, ou un calculateur, générant des ordres de commande destinés aux organes de commande 30. Ainsi, chaque voie de calcul peut appliquer un algorithme mémorisé pour piloter l'aéronef afin de suivre une trajectoire préprogrammée. Les voies de calcul peuvent toutes être destiné à transmettre un signal aux mêmes organes de commandes 30.

Une voie de calcul peut comprendre par exemple au moins un processeur 51 associé à au moins une mémoire 52, au moins un circuit intégré, au moins un système programmable, au moins un circuit logique, ces exemples ne limitant pas la portée donnée à l'expression « voie de calcul ».

Les voies de calcul peuvent être d'un type connu et peuvent présenter un niveau de sécurité/fiabilité modéré, tel que par exemple un niveau connu sous l'acronyme DAL.

Les voies de calcul 50 peuvent respectivement être des calculateurs indépendants, ou peuvent conjointement être des parties d'un calculateur. Par exemple, chaque voie de calcul est une carte électronique d'un même calculateur.

En outre et en référence à la figure 1, le système de pilotage automatique 20 comporte plusieurs jeux de senseurs 40 redondants et indépendants les uns des autres. Chaque jeu de senseurs 40 possède des senseurs pour évaluer une position de l'aéronef 1 et un mouvement de l'aéronef 1. Par exemple, chaque jeu de senseurs 40 comporte un système de positionnement 41 positionnant l'aéronef 1 dans le référentiel terrestre et une centrale inertielle 42.

Par exemple, chaque voie de calcul 50 est reliée aux senseurs d'un unique jeu de senseurs 40 qui lui est dédié. Ainsi, chaque voie de calcul peut exploiter les informations transmises par le jeu de senseurs associé pour respecter un plan de vol préprogrammé.

Le système de pilotage automatique comporte par ailleurs un superviseur 60. Ce superviseur 60 est fonctionnellement indépendant des voies de calcul. L'expression « superviseur » désigne une unité de calcul, ou un calculateur, qui peut notamment appliquer un algorithme mémorisé permettant de s'assurer que l'aéronef suive la trajectoire préprogrammée dans les voies de calcul 50

Un superviseur 60 peut comprendre par exemple au moins un processeur 61 associé à au moins une mémoire 62, au moins un circuit intégré, au moins un système programmable, au moins un circuit logique, ces exemples ne limitant pas la portée donnée à l'expression « superviseur ». Le superviseur peut présenter un niveau de sécurité/fiabilité DAL élevé, à savoir plus élevé que le niveau de fiabilité/sécurité des voies de calcul 50.

Le superviseur 60 peut appartenir à un calculateur possédant les voies de calcul 50. Par exemple, chaque voie de calcul et le superviseur sont des cartes électroniques d'un même calculateur.

Le superviseur 60 peut aussi constituer un équipement à part entière distinct des voies de calcul.

Le superviseur 60 peut être relié à son propre jeu de senseurs 40. Ce jeu de senseurs peut aussi posséder un système de positionnement 41 par satellites positionnant l'aéronef 1 dans le référentiel terrestre et une centrale inertielle 42. Dès lors, chaque senseur d'un jeu de senseurs 40 peut être relié à une unique voie de calcul 50 ou uniquement au superviseur 60.

Le superviseur 60 permet notamment de coupler à chaque instant au maximum une desdites voies de calcul 50 auxdits organes de commande 30. Par exemple, le superviseur est relié à chaque voie de calcul et aux organes de commande, le superviseur transmettant uniquement aux organes de commande 30 les commandes élaborées par une voie de calcul. Les commandes élaborées par les autres voies de calcul sont ignorées.

A titre illustratif, chaque voie de calcul 50 peut être reliée aux organes de commande 30 par un interrupteur ou équivalent. Le superviseur 60 ouvre alors tous les interrupteurs sauf un pour coupler une voie de calcul particulière aux organes de commande 30.

La voie de calcul 50 couplée est dite « voie engagée ». Cette voie engagée génère donc des commandes transmises aux organes de commande 30, ces commandes étant fonction des données transmises par le jeu de senseurs associé.

En outre, le superviseur 60 a aussi pour fonction de découpler la voie engagée des organes de commande 30 lorsqu'un comportement courant de l'aéronef 1 est différent d'un comportement prédictif prédéterminé et/ou lorsque le jeu de senseurs d'une voie de calcul est défaillant.

Selon la figure 1, le superviseur 60 peut être programmé pour déterminer si le comportement courant de l'aéronef 1 est différent d'un comportement prédictif prédéterminé.

Selon la figure 2, cette fonction peut être réalisée par un ensemble déporté 70 qui n'est pas embarqué dans l'aéronef. Cet ensemble déporté 70 peut comprendre un calculateur 71 en communication avec ledit superviseur 60 par une liaison non filaire, telle qu'une liaison par radio fréquence par exemple. Le calculateur 71 peut comprendre par exemple au moins un processeur associé à au moins une mémoire, au moins un circuit intégré, au moins un système programmable, au moins un circuit logique, ces exemples ne limitant pas la portée donnée à l'expression « calculateur 71 ».

L'ensemble déporté 70 peut aussi comporter un dispositif de positionnement 72 pour déterminer la position et le mouvement de l'ensemble embarqué. Par exemple, ce dispositif de positionnement 72 peut comprendre un radar.

De manière complémentaire ou alternative, l'ensemble déporté 70 peut transmettre des commandes au superviseur 60, ces commandes étant transmises aux organes de pilotage par le superviseur. Le pilotage de l'aéronef peut alors être fait à distance à partir de l'ensemble déporté.

Indépendamment de la variante et en référence à la figure 1, ce système de pilotage automatique 20 peut appliquer le procédé selon l'invention.

Selon ce procédé, chaque voie de calcul 50 est programmée pour que l'aéronef 1 suive un plan de vol particulier. De même, le superviseur 60 et/ou le cas échéant l'ensemble déporté 70 mémorise ce plan de vol. L'aéronef doit alors avoir dans l'espace un comportement dénommé « comportement prédictif ». L'expression « comportement prédictif » peut englober des données mémorisés et par exemple une trajectoire à suivre et/ou des limites de paramètres de mouvement à ne pas dépasser. Ces limites peuvent inclure des limites en assiette, et/ou des limites en vitesses/accélérations angulaires et/ou des limites en vitesses/accélérations horizontales et verticales.

Ainsi, les voies de calcul mémorisent la trajectoire à suivre, ainsi que des limites de mouvement à respecter. Il en va de même pour le superviseur et/ou le cas échéant l'ensemble déporté.

Durant un vol dit « vol courant », et par exemple après programmation et activation du mode de pilotage automatique, le superviseur 60 couple une voie de calcul 50 particulière et les organes de commande 30.

Par exemple, le superviseur 60 mémorise une liste hiérarchisant les voies de calcul 50. Le superviseur 60 couple alors la première voie de calcul de cette liste avec les organes de commande 30.

La voie de calcul couplée à un instant donné est dite « voie engagée ». Le déplacement de l'aéronef est alors piloté par cette voie engagée.

Dès lors, le comportement courant de l'aéronef 1 est surveillé, et comparé au comportement prédictif préprogrammé. Le comportement prédictif préprogrammé peut prendre la forme de données mémorisées, tels qu'une trajectoire mémorisée à suivre, et/ou des limites basses et hautes en vitesses/accélérations angulaires à suivre, et/ou des limites basses et hautes en vitesses/accélérations horizontales et verticales et/ou des limites d'angles d'assiette.

Selon une première réalisation, le comportement courant est surveillé par le superviseur 60.

Par exemple, le superviseur 60 utilise les données transmises par les senseurs 41, 42 du jeu de senseurs en communication avec ce superviseur. A l'aide de la position relevée, le superviseur 60 détermine si l'aéronef suit la trajectoire programmée, à une marge de position près éventuellement. En outre et à l'aide de sa centrale inertielle 42, le superviseur 60 vérifie que l'aéronef respecte les limites imposées. Par exemple, le superviseur vérifie que des limites basses et hautes en vitesses/accélérations angulaires ainsi que des limites basses et hautes en vitesses/accélérations horizontales et verticales sont respectées. Dans l'affirmative, le superviseur estime que le comportement courant est conforme au comportement prédictif attendu.

De manière alternative, le superviseur 60 peut recevoir les données relevées par les senseurs de tous les jeux de senseurs. Par une méthode statistique usuelle, le superviseur 60 détermine une position consolidée et des paramètres de mouvement consolidés en analysant la cohérence des positions et des paramètres de mouvement fournis par les senseurs des jeux de senseurs 40. Le comportement courant est alors surveillé par le superviseur 60 en utilisant la position consolidée et les paramètres de mouvement consolidés.

Selon une deuxième réalisation, le comportement courant est surveillé par un ensemble déporté 70 situé en dehors de l'aéronef 1. Le cas échéant, l'ensemble déporté 70 indique au superviseur 60 si le comportement courant n'est pas conforme au comportement prédictif ou si le comportement courant est conforme au comportement prédictif.

Quelle que soit la réalisation et lorsque le comportement courant diffère du comportement prédictif, le superviseur 60 découple la voie engagée et les organes de pilotage 10.

Eventuellement toute voie de calcul qui a été engagée durant le vol courant ne plus être à nouveau engagée par la suite.

Si au moins une voie de calcul 50 n'a pas été engagée durant le vol courant, ledit superviseur 60 couple une telle voie de calcul 50 avec les organes de pilotage 10. Le cas échéant, le superviseur peut coupler la voie de calcul qui se situe après la voie engagée dans la liste mémorisée des voies de calcul.

La voie de calcul 50 nouvellement couplée aux organes de pilotage 10 devient la nouvelle voie engagée.

Par contre, lorsque le superviseur 60 a découplé toutes les voies de calcul 50 lors dudit vol courant, le superviseur 60 peut appliquer un mode de secours.

Selon une première alternative, le superviseur 60 est programmé pour commander lui-même les organes de commande 30. Par exemple, le superviseur génère des ordres pour mettre en vol stationnaire l'aéronef 1, dans l'attente d'un pilotage par un ensemble déporté 70 non présent dans l'aéronef 1. Dès lors, un pilote peut par exemple utiliser l'ensemble déporté 70 pour piloter à distance l'aéronef.

Selon une deuxième alternative, le superviseur 60 peut contrôler les organes de pilotage 10 pour suivre une procédure préprogrammée, par exemple une procédure d'atterrissage sur une base mémorisée.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Système de pilotage automatique (20) destiné à un aéronef (1), ledit système de pilotage automatique (20) comprenant un ensemble embarqué (25) destiné à être embarqué dans ledit aéronef (1), ledit ensemble embarqué (25) comprenant au moins un organe de commande (30) destiné à piloter au moins un organe de pilotage (10) dudit aéronef (1) qui pilote un mouvement de l'aéronef (1), **caractérisé en ce que** ledit ensemble embarqué (25) comporte :
- plusieurs jeux de senseurs (40) redondants et indépendants les uns des autres, chaque jeu de senseurs (40) comprenant des senseurs (41, 42) pour évaluer une position de l'aéronef (1) et un mouvement de l'aéronef (1),
- plusieurs voies de calcul (50) redondantes et indépendantes les unes des autres, lesdites voies de calcul (50) indépendantes n'ayant pas besoin d'une autre voie de calcul pour fonctionner, chaque voie de calcul (50) étant reliée aux senseurs d'un dit jeu de senseurs (40) et recevant des données en provenance de ces senseurs,
- un superviseur (60) relié aux senseurs d'un dit jeu de senseurs (40),
le superviseur (60) ayant pour fonction de coupler au plus une desdites voies de calcul (50) auxdits organes de commande (30), la voie de calcul (50) couplée étant dite « voie engagée » et étant destinée à générer des commandes transmises aux organes de commande (30) en fonction desdites données reçues, ledit superviseur (60) ayant pour fonction de découpler ladite voie engagée des organes de commande lorsqu'un comportement courant de l'aéronef (1) est différent d'un comportement prédictif prédéterminé ; lorsque ledit comportement courant diffère dudit comportement prédictif qui est préprogrammé, ledit superviseur (60) étant configuré pour découpler ladite voie engagée et lesdits organes de pilotage (10), et si au moins une voie de calcul (50) n'a pas été engagée durant ledit vol courant alors ledit superviseur (60) couple une voie de calcul (50) n'ayant pas été engagée durant ledit vol avec lesdits organes de pilotage (10), cette voie de calcul (50) nouvellement couplée aux organes de pilotage (10) devenant à son tour ladite voie engagée ;
en outre ledit comportement prédictif définit une trajectoire à suivre et des limites de paramètres de mouvement à ne pas dépasser, ledit comportement courant étant différent du comportement prédictif lorsque l'aéronef (1) ne suit plus ladite trajectoire ou si au moins une desdites limites n'est pas respectée.

2. Système de pilotage automatique selon la revendication 1, **caractérisé en ce que** chaque jeu de senseurs (40) est relié à une unique voie de calcul (50) ou uniquement au superviseur (60).

3. Système de pilotage automatique selon l'une quelconque des revendications 1 à 2,
**caractérisé en ce que** chaque jeu de senseurs (40) comporte un système de positionnement (41) positionnant ledit aéronef (1) dans le référentiel terrestre et une centrale inertielle (42).

4. Système de pilotage automatique selon l'une quelconque des revendications 1 à 3,
**caractérisé en ce que** ledit système de pilotage automatique (20) comporte un ensemble déporté (70) qui n'est pas destiné à être embarqué dans l'aéronef (1), ledit ensemble déporté (70) ayant un calculateur (71) en communication avec ledit superviseur (60) par une liaison non filaire.

5. Système de pilotage automatique selon la revendication 4, **caractérisé en ce que** ledit ensemble déporté (70) comporte un dispositif de positionnement (72) pour déterminer la position et le mouvement de l'ensemble embarqué.

6. Système de pilotage automatique selon la revendication 4, **caractérisé en ce que** ledit le superviseur est relié auxdites voies de calcul et au dit au moins un organe de commande (30).

7. Aéronef (1) muni d'au moins un organe de pilotage (10) qui pilote un mouvement de l'aéronef (1),
**caractérisé en ce que** ledit aéronef (1) comporte un système de pilotage automatique (20) selon l'une quelconque des revendications 1 à 6, ledit ensemble embarqué (25) étant embarqué dans l'aéronef (1).

8. Aéronef selon la revendication 7,
**caractérisé en ce que** ledit aéronef (1) est un aéronef sans pilote embarqué.

9. Aéronef selon l'une quelconque des revendications 7 à 8,
**caractérisé en ce que** ledit au moins un organe de pilotage (10) comprend au moins un des organes suivants : un moteur (2), une surface aérodynamique (5, 7) mobile par rapport à un référentiel de l'aéronef.

10. Procédé de pilotage automatique d'un aéronef avec un système de pilotage automatique (20), **caractérisé en ce que** ce système de pilotage automatique (20) est configuré selon l'une quelconque des revendications 1 à 6,
ce procédé mettant en œuvre les étapes suivantes lors d'un vol courant de l'aéronef (1) :
- contrôle de l'évolution de l'aéronef (1) par une desdites voies de calcul (50) dite « voie engagée », ladite voie engagée étant couplée avec lesdits organes de pilotage (10) pour commander ces organes de pilotage (10),
- surveillance d'un comportement courant de l'aéronef (1) au regard d'un comportement prédictif préprogrammé,
- lorsque ledit comportement courant diffère dudit comportement prédictif, ledit superviseur (60) découple ladite voie engagée et lesdits organes de pilotage (10), et si au moins une voie de calcul (50) n'a pas été engagée durant ledit vol courant alors ledit superviseur (60) couple une voie de calcul (50) n'ayant pas été engagée durant ledit vol avec lesdits organes de pilotage (10), cette voie de calcul (50) nouvellement couplée aux organes de pilotage (10) devenant à son tour ladite voie engagée ;
ledit comportement prédictif définissant une trajectoire à suivre et des limites de paramètres de mouvement à ne pas dépasser, ledit comportement courant étant différent du comportement prédictif lorsque l'aéronef (1) ne suit plus ladite trajectoire ou si au moins une desdites limites n'est pas respectée.

11. Procédé selon la revendication 10,
**caractérisé en ce que**, chaque jeu de senseurs (40) déterminant des données incluant une position de l'aéronef (1) et des paramètres de mouvement définissant un mouvement de l'aéronef (1), ledit superviseur (60) détermine une position consolidée et des paramètres de mouvement consolidés en analysant la cohérence desdites positions et des paramètres de mouvement fournis par les senseurs des jeux de senseurs (40).

12. Procédé selon la revendication 11,
**caractérisé en ce que** ledit comportement courant est surveillé par le superviseur (60) en utilisant la position consolidée et les paramètres de mouvement consolidés.

13. Procédé selon l'une quelconque des revendications 10 à 12,
**caractérisé en ce que** lorsque ledit superviseur (60) a découplé toutes les voies de calcul (50) lors dudit vol courant, ledit superviseur (60) applique un mode de secours en commandant lesdits organes de commande (30) pour mettre en vol stationnaire l'aéronef (1) dans l'attente d'un pilotage par un ensemble déporté (70) non présent dans l'aéronef (1), ledit ensemble déporté (70) communiquant avec ledit superviseur (60) pour piloter l'aéronef (1).

14. Procédé selon l'une quelconque des revendications 10 à 13,
**caractérisé en ce que** lorsque ledit superviseur (60) a découplé toutes les voies de calcul (50), ledit superviseur (60) contrôle lesdits organes de pilotage (10) pour suivre une procédure préprogrammée.

15. Procédé selon l'une quelconque des revendications 10 à 14,
**caractérisé en ce que** ledit comportement courant est surveillé par un ensemble déporté (70) situé en dehors de l'aéronef (1), ledit ensemble déporté (70) indiquant au superviseur (60) si la voie engagée doit être découplée des organes de commande (30).

16. Procédé selon l'une quelconque des revendications 10 à 15,
**caractérisé en ce que** ledit superviseur (60) comporte une liste hiérarchisant les voies de calcul (50), ledit superviseur (60) choisissant la voie de calcul qui doit être la voie engagée en utilisant ladite liste.

## Patentansprüche

1. Automatisches Lenksystem (20) für ein Luftfahrzeug (1), wobei das automatische Lenksystem (20) eine Bordeinheit (25) umfasst, die dazu bestimmt ist, in dem Luftfahrzeug (1) mitgeführt zu werden, wobei die Bordeinheit (25) mindestens ein Steuerorgan (30) umfasst, das dazu bestimmt ist, mindestens ein Lenkorgan (10) des Luftfahrzeugs (1) zu steuern, das eine Bewegung des Luftfahrzeugs (1) lenkt, **dadurch gekennzeichnet, dass** die Bordeinheit (25) umfasst:
- mehrere Sätze von Sensoren (40), die redundant und unabhängig voneinander sind, wobei jeder Satz von Sensoren (40) Sensoren (41, 42) zum Auswerten einer Position des Luftfahrzeugs (1) und einer Bewegung des Luftfahrzeugs (1) umfasst,
- mehrere redundante, voneinander unabhängige Rechenkanäle (50), wobei die unabhängigen Rechenkanäle (50) keinen weiteren Rechenkanal zum Betrieb benötigen, wobei jeder Rechenkanal (50) mit den Sensoren eines Satzes von Sensoren (40) verbunden ist und Daten von diesen Sensoren empfängt,
- einen Supervisor (60), der mit den Sensoren eines besagten Satzes von Sensoren (40) verbunden ist,
wobei der Supervisor (60) die Funktion hat, höchstens einen der genannten Rechenkanäle (50) mit den genannten Steuerorganen (30) zu koppeln, wobei der gekoppelte Rechenkanal (50) als "belegter Kanal" bezeichnet wird und dazu bestimmt ist, in Abhängigkeit von den genannten empfangenen Daten Befehle zu erzeugen, die an die Steuerorgane (30) übertragen werden, wobei der Supervisor (60) die Funktion hat, den belegten Kanal von den Steuerorganen zu entkoppeln, wenn sich ein aktuelles Verhalten des Luftfahrzeugs (1) von einem vorgegebenen prädiktiven Verhalten unterscheidet; wobei der Supervisor (60) konfiguriert ist, um, wenn sich das aktuelle Verhalten von dem vorprogrammierten prädiktiven Verhalten unterscheidet, den belegten Kanal und die Lenkorgane (10) zu entkoppeln, und wenn mindestens ein Rechenkanal (50) während des aktuellen Fluges nicht belegt gewesen ist, der Supervisor (60) einen Rechenkanal (50), der während des Fluges nicht belegt war, mit den Flugsteuerelementen (10) koppelt, wobei dieser neu mit den Flugsteuerelementen (10) gekoppelte Rechenkanal (50) seinerseits der belegte Kanal wird;
wobei ferner das prädiktive Verhalten eine zu verfolgende Flugbahn und Grenzen von Bewegungsparametern definiert, die nicht überschritten werden dürfen, und wobei sich das aktuelle Verhalten von dem prädiktiven Verhalten unterscheidet, wenn das Luftfahrzeug (1) der Flugbahn nicht mehr folgt oder wenn mindestens eine der Grenzen nicht eingehalten wird.

2. Automatisches Lenksystem nach Anspruch 1,
**dadurch gekennzeichnet, dass** jeder Satz von Sensoren (40) mit einem einzigen Rechenkanal (50) oder nur mit dem Supervisor (60) verbunden ist.

3. Automatisches Lenksystem nach einem der Ansprüche 1 bis 2,
**dadurch gekennzeichnet, dass** jede Gruppe von Sensoren (40) ein Positionierungssystem (41), das das Luftfahrzeug (1) im terrestrischen Bezugssystem positioniert, und eine Trägheitseinheit (42) umfasst.

4. Automatisches Lenksystem nach einem der Ansprüche 1 bis 3,
**dadurch gekennzeichnet, dass** das automatische Lenksystem(20) eine entfernte Einheit (70) umfasst, die nicht dazu bestimmt ist, in dem Luftfahrzeug (1) mitgeführt zu werden, wobei die entfernte Einheit (70) einen Computer (71) aufweist, der über eine drahtlose Verbindung mit dem Supervisor (60) in Kommunikation steht.

5. Automatisches Lenksystem nach Anspruch 4,
**dadurch gekennzeichnet, dass** die entfernte Einheit (70) eine Positioniervorrichtung (72) zur Bestimmung der Position und der Bewegung der mitgeführten Einheit umfasst.

6. Automatisches Lenksystem nach Anspruch 4,
**dadurch gekennzeichnet, dass** der Supervisor mit den Rechenkanälen und mit dem mindestens einen Steuerorgan (30) verbunden ist.

7. Luftfahrzeug (1) mit mindestens einem Lenkorgan (10), das eine Bewegung des Luftfahrzeugs (1) lenkt,
**dadurch gekennzeichnet, dass** das Luftfahrzeug (1) ein automatisches Lenksystem (20) nach einem der Ansprüche 1 bis 6 umfasst, wobei die mitgeführte Einheit (25) im Luftfahrzeug (1) mitgeführt ist.

8. Luftfahrzeug nach Anspruch 7,
**dadurch gekennzeichnet, dass** das Luftfahrzeug (1) ein Luftfahrzeug ohne mitgeführten Piloten ist.

9. Luftfahrzeug nach einem der Ansprüche 7 bis 8,
**dadurch gekennzeichnet, dass** das mindestens eine Lenkorgan (10) mindestens eines der folgenden Organe umfasst: einen Motor (2), eine aerodynamische Fläche (5, 7), die relativ zu einem Bezugssystem des Luftfahrzeugs beweglich ist.

10. Verfahren zum automatischen Lenken eines Luftfahrzeugs mit einem automatischen Lenksystem (20), **dadurch gekennzeichnet, dass** das automatische Lenksystem (20) nach einem der Ansprüche 1 bis 6 konfiguriert ist,
wobei das Verfahren während eines Routinefluges des Luftfahrzeugs die folgenden Schritte durchführt (1):
- Steuern der Bewegung des Luftfahrzeugs (1) durch einen der genannten Rechenkanäle (50), als "belegter Kanal" bezeichnet, wobei der belegte Kanal mit den genannten Lenkorganen (10) gekoppelt ist, um diese Lenkorgane (10) zu steuern,
- Überwachen eines aktuellen Verhaltens des Luftfahrzeugs (1) anhand eines vorprogrammierten prädiktiven Verhaltens,
- wenn sich das aktuelle Verhalten von dem prädiktiven Verhalten unterscheidet, entkoppelt der Supervisor (60) den belegten Kanal und die Lenkorgane (10), und wenn mindestens ein Rechenkanal (50) während des aktuellen Fluges nicht belegt war, koppelt der Supervisor (60) einen Rechenkanal (50), der während des Fluges nicht belegt war, mit den Flugsteuerelementen (10), wobei dieser neu mit den Flugsteuerelementen (10) gekoppelte Rechenkanal (50) seinerseits der belegte Kanal wird;
wobei das prädiktive Verhalten eine zu verfolgende Flugbahn und Grenzen von Bewegungsparametern definiert, die nicht überschritten werden dürfen, wobei sich das aktuelle Verhalten von dem prädiktiven Verhalten unterscheidet, wenn das Luftfahrzeug (1) der Flugbahn nicht mehr folgt oder wenn mindestens eine der Grenzen nicht eingehalten wird.

11. Verfahren nach Anspruch 10,
**dadurch gekennzeichnet, dass** jeder Satz von Sensoren (40) Daten bestimmt, die eine Position des Luftfahrzeugs (1) und Bewegungsparameter, die eine Bewegung des Luftfahrzeugs (1) definieren, umfassen, wobei die Überwachungseinrichtung (60) eine konsolidierte Position und konsolidierte Bewegungsparameter bestimmt, indem sie die Konsistenz der von den Sensoren der Sätze von Sensoren (40) gelieferten Positionen und Bewegungsparameter analysiert.

12. Verfahren nach Anspruch 11,
**dadurch gekennzeichnet, dass** das aktuelle Verhalten von dem Supervisor (60) unter Verwendung der konsolidierten Position und der konsolidierten Bewegungsparameter überwacht wird.

13. Verfahren nach einem der Ansprüche 10 bis 12,
**dadurch gekennzeichnet, dass**, wenn der Supervisor (60) während des laufenden Fluges alle Rechenkanäle (50) entkoppelt hat, der Supervisor (60) einen Notfallmodus anwendet, indem er die Steuerorgane (30) steuert, um das Luftfahrzeug (1) in einen Schwebeflug zu versetzen, in Erwartung der Steuerung durch eine nicht im Luftfahrzeug (1) vorhandene entfernte Einheit (70), wobei die entfernte Einheit (70) mit dem Supervisor (60) kommuniziert, um das Luftfahrzeug (1) zu steuern.

14. Verfahren nach einem der Ansprüche 10 bis 13,
**dadurch gekennzeichnet, dass**, wenn der Supervisor (60) alle Rechenkanäle (50) entkoppelt hat, der Supervisor (60) die Lenkorgane (10) so steuert, dass sie einer vorprogrammierten Prozedur folgen.

15. Verfahren nach einem der Ansprüche 10 bis 14,
**dadurch gekennzeichnet, dass** das aktuelle Verhalten durch eine entfernte Einheit (70) überwacht wird, die sich außerhalb des Luftfahrzeugs (1) befindet, wobei die entfernte Einheit (70) dem Supervisor (60) anzeigt, ob der belegte Kanal von den Lenkorganen (30) entkoppelt werden muss.

16. Verfahren nach einem der Ansprüche 10 bis 15,
**dadurch gekennzeichnet, dass** der Supervisor (60) eine Liste umfasst, die die Rechenkanäle (50) hierarchisiert, wobei der Supervisor (60) unter Verwendung der Liste den Rechenkanal auswählt, der der belegte Kanal sein soll.

## Claims

1. Autopilot system (20) for an aircraft (1), the said autopilot system (20) comprising an on-board unit (25) intended to be installed in the said aircraft (1), the said on-board unit (25) comprising at least one command component (30) intended to control at least one piloting component (10) of the said aircraft (1), which controls a movement of the aircraft (1), **characterized in that** the said on-board unit (25) includes:
- a plurality of redundant and mutually independent sensor sets (40), each sensor set (40) comprising sensors (41, 42) for evaluating a position of the aircraft (1) and a movement of the aircraft (1),
- a plurality of redundant and mutually independent calculation channels (50), the said independent calculation channels (50) not requiring another calculation channel in order to function, each calculation channel (50) being connected to the sensors of one of the said sensor set (40) and receiving data coming from these sensors,
- a supervisor (60) connected to the sensors of one of the said sensor set (40),
the supervisor (60) having the function of coupling at most one of the said calculation channels (50) to the said command components (30), the coupled calculation channel (50) being referred to as the "engaged channel" and being intended to generate command, which are sent to the command components (30), as a function of the said received data, the said supervisor (60) having the function of decoupling the said engaged channel from the command components when a current behaviour of the aircraft (1) is different from a predetermined predictive behaviour; when the said current behaviour differs from the said predictive behaviour, which is preprogrammed, the said supervisor (60) being configured to decouple the said engaged channel and the said piloting components (10), and, if at least one calculation channel (50) has not been engaged during the said current flight, the said supervisor (60) couples a calculation channel (50) that has not been engaged during the said flight to the said piloting components (10), this calculation channel (50) newly coupled to the piloting components (10) in turn becoming the said engaged channel;
furthermore, the said predictive behaviour defines a trajectory to be followed and movement parameter limits not to be exceeded, the said current behaviour being different from the predictive behaviour when the aircraft (1) no longer follows the said trajectory or if at least one of the said limits is not complied with.

2. Autopilot system according to claim 1,
**characterised in that** each sensor set (40) is connected to one single calculation channel (50) or only to the supervisor (60).

3. Autopilot system according to either of claims 1 and 2,
**characterised in that** each sensor set (40) includes a positioning system (41), which locates the said aircraft (1) in the terrestrial reference frame, and an inertial measurement unit (42).

4. Autopilot system according to any one of claims 1 to 3,
**characterised in that** the said autopilot system (20) includes a remote unit (70) which is not intended to be installed in the aircraft (1), the said remote unit (70) having a computer (71) in communication with the supervisor (60) via a wireless link.

5. Autopilot system according to claim 4,
**characterised in that** the said remote unit (70) includes a positioning device (72) for determining the position and the movement of the on-board assembly.

6. Autopilot system according to claim 4,
**characterised in that** the said supervisor is connected to the said calculation channels and to the said at least one command component (30).

7. Aircraft (1), provided with at least one piloting component (10) which controls a movement of the aircraft (1),
**characterised in that** the said aircraft (1) includes an autopilot system (20) according to any one of claims 1 to 6, the said on-board unit (25) being installed in the aircraft (1).

8. Aircraft according to claim 7,
**characterised in that** the said aircraft (1) is an unmanned aircraft.

9. Aircraft according to either of claims 7 and 8,
**characterised in that** the said at least one piloting component (10) comprises at least one of the following components: a motor (2), an aerodynamic surface (5, 7) that can move relative to a reference frame of the aircraft.

10. Method for automatically piloting an aircraft with an autopilot system (20), **characterised in that** this autopilot system (20) is configured according to any one of claims 1 to 6,
this method implementing the following steps during a current flight of the aircraft (1):
- managing the progress of the aircraft (1) via one of the said calculation channels (50), referred to as the "engaged channel", the said engaged channel being coupled to the said piloting components (10) in order to command these piloting components (10),
- monitoring a current behaviour of the aircraft (1) in relation to a preprogrammed predictive behaviour,
- when the said current behaviour differs from the said predictive behaviour, the said supervisor (60) decouples the said engaged channel and the said piloting components (10), and, if at least one calculation channel (50) has not been engaged during the said current flight, the said supervisor (60) couples a calculation channel (50) that has not been engaged during the said flight to the said piloting components (10), this calculation channel (50) newly coupled to the piloting components (10) in turn becoming the said engaged channel;
the said predictive behaviour defining a trajectory to be followed and movement parameter limits not to be exceeded, the said current behaviour being different from the predictive behaviour when the aircraft (1) no longer follows the said trajectory or if at least one of the said limits is not complied with.

11. Method according to claim 10,
**characterised in that**, each sensor set (40) determining data including a position of the aircraft (1) and movement parameters defining a movement of the aircraft (1), the said supervisor (60) determines a consolidated position and consolidated movement parameters by analysing the consistency of the said positions and of the movement parameters provided by the sensors of the sensor sets (40).

12. Method according to claim 11,
**characterised in that** the said current behaviour is monitored by the supervisor (60) by using the consolidated position and the consolidated movement parameters.

13. Method according to any one of claims 10 to 12,
**characterised in that** when the said supervisor (60) has decoupled all the calculation channels (50) during the said current flight, the said supervisor (60) applies a safety mode by commanding the said command components (30) to make the aircraft (1) hover while waiting for piloting by a remote unit (70) not present in the aircraft (1), the said remote unit (70) communicating with the said supervisor (60) in order to pilot the aircraft (1).

14. Method according to any one of claims 10 to 13,
**characterised in that** when the said supervisor (60) has decoupled all the calculation channels (50), the said supervisor (60) manages the said piloting components (10) so as to follow a preprogrammed procedure.

15. Method according to any one of claims 10 to 14,
**characterised in that** the said current behaviour is monitored by a remote assembly (70) located outside the aircraft (1), the said remote assembly (70) indicating to the supervisor (60) whether the engaged channel should be decoupled from the command components (30).

16. Method according to any one of claims 10 to 15,
**characterised in that** the said supervisor (60) includes a list hierarchising the calculation channels (50), the said supervisor (60) selecting the calculation channel which should be the engaged channel by using the said list.
